# EUROPÄISCHE PATENTANMELDUNG

(11) **EP 2 626 815 A2**
(43) Veröffentlichungstag der Anmeldung: **14.08.2013**
(21) Anmeldenummer: 13154579.0
(22) Anmeldetag: 08.02.2013
(51) Int. Cl.: G06K 19/077

(54) **Herstellungsverfahren für ein Transponderetikett und Transponderetikett**

(30) Priorität: 10.02.2012 DE 102012101104
(71) Anmelder: Schreiner Group GmbH & Co. KG, 85764 Oberschleissheim (DE)
(72) Erfinder: Hölzl, Gerhard, 85777 Fahrenzhausen (DE); Glück, Joachim, 85051 Ingolstadt (DE); Walter, Mark, 85716 Unterschleißheim (DE); Germann, Thomas, 83229 Aschau (DE)
(74) Vertreter: Epping - Hermann - Fischer

(57) **Zusammenfassung**

Beschrieben wird ein Transponderetikett (10) und ein entsprechendes Herstellungsverfahren für ein Transponderetikett, bei dem die Antennenstruktur (21) mittels eines Laserstrahls aus einer elektrisch leitfähigen Fläche (20) heraus erzeugt wird. Somit können individuelle und komplexe Antennenstrukturen besonders einfach und präzise hergestellt werden. Eine nachträgliche Feinabstimmung der so hergestellten Antennenstruktur ist möglich und führt zu besonders effizienten Transponderetiketten. Die Antennenstruktur kann als Dipolantenne oder Schlitzantenne hergestellt werden.

## Beschreibung

Die vorliegende Erfindung betrifft ein Herstellungsverfahren für ein Transponderetikett. Ferner betrifft die Erfindung ein Transponderetikett, das gemäß diesem Verfahren hergestellt wurde.

Transponderelemente mit RFID-Chips (Radio Frequency IDentification) werden derzeit in zahlreichen Bereichen eingesetzt. Solche Chips sind in der Lage, Daten zu speichern und über eine angeschlossene Antenne die gespeicherten Daten drahtlos mit einer Sende- und Empfangsstation (Reader) auszutauschen.

Beispielsweise werden solche RFID-Transponder in großem Maße im Bereich der Zugangskontrolle oder der Logistik eingesetzt. Aufgrund der drahtlosen Übertragungstechnik ist zwischen dem Transponderchip und der Leseeinheit kein visueller oder mechanischer Kontakt erforderlich. Im Gegensatz zu optischen Systemen, wie beispielsweise einem Strichcode oder ähnlichem, ist es nicht erforderlich, dass zwischen Leseeinrichtung und dem Transponderchip eine Sichtverbindung bestehen muss. Darüber hinaus kann auf einem Transponderchip auch eine wesentlich größere Menge an Daten gespeichert werden, als dies beispielsweise mit einem ein-oder zweidimensionalen Barcode möglich wäre. Ferner sind die RFID-Chips auch in der Lage, die gespeicherten Daten verschlüsselt abzulegen und somit vor unbefugtem Auslesen oder einer Manipulation zu schützen.

Die in den Transponderchips gespeicherten Daten können jedoch nur mit Hilfe eines speziellen Lesegerätes ausgelesen, weiterverarbeitet und sichtbar gemacht werden. Oft ist darüber hinaus für eine rasche Kontrolle auch eine zusätzliche optische Kennzeichnung vorteilhaft, die von einem Benutzer ohne Hilfsmittel wahrgenommen werden kann.

Hierfür muss ein Transponderetikett zusätzlich mit optisch wahrnehmbaren Kennzeichnungselementen ausgestattet werden. Dies erfordert in der Regel einen separaten, zusätzlichen Arbeitsschritt.

Bei der Herstellung eines konventionellen Transponderetiketts wird in der Regel ein Basisträger mit einer vorgefertigten Antennenstruktur verwendet. Dieses Element muss in weiteren Prozessschritten mit dem Transponderchip und gegebenenfalls einer mit dem Transponderchip verbundenen Primärantenne zusammengeführt werden. Für weitere optische Kennzeichnungen muss auf diesen Aufbau eine weitere Materiallage aufgebracht werden, die als Träger für die optische Kennzeichnung dient.

Diese weitere Materiallage kann beispielsweise zuvor bedruckt werden. Dabei ist ein relativ aufwändiges Zusammenführen des bedruckten Kennzeichnungselements mit dem Transponderetikett erforderlich.

Alternativ kann auch zunächst eine neutrale Materiallage aufgebracht werden. Diese wird dann in einem späteren Arbeitsschritt mit den gewünschten Kennzeichnungselementen versehen. In diesem Fall besteht die Gefahr, dass bei dem Aufbringen der Kennzeichnungselemente, insbesondere bei einem Druckvorgang, das darunterliegende Transponderelement beschädigt und damit unbrauchbar wird.

Es ist die Aufgabe der vorliegenden Erfindung ein Herstellungsverfahren bereitzustellen, mit dem einerseits eine effiziente Herstellung eines Transponderetiketts ermöglicht wird und dabei gleichzeitig eine schnelle, effiziente und vor allem sichere optische Kennzeichnung des Transponderetiketts durchgeführt werden kann. Weiterhin soll das erfindungsgemäß hergestellte Transponderetikett möglichst gute Sende- und Empfangseigenschaften aufweisen.

Diese Aufgabe wird durch ein Verfahren zur Herstellung eines Transponderetiketts gelöst, das die folgenden Schritte umfasst: Zunächst wird eine Trägerbahn mit einer elektrisch leitfähigen Beschichtung bereitgestellt. Anschließend wird auf der Trägerbahn eine Antennenstruktur durch partielle Modifikation der elektrisch leitfähigen Beschichtung ausgebildet. Anschließend wird ein Transponderchip auf die Trägerbahn mit der ausgebildeten Antennenstruktur aufgebracht.

Die genannte Aufgabe wird weiterhin durch ein Transponderetikett gelöst, das eine elektrisch isolierende Trägerbahn, eine elektrisch leitfähige Beschichtung und ein Transponderelement mit mindestens einem Transponderchip umfasst. Auf der elektrisch leitfähigen Beschichtung, die auf der elektrisch isolierenden Trägerbahn aufgebracht ist, ist durch eine partielle lokale Modifikation der elektrisch leitfähigen Beschichtung eine Antennenstruktur ausgebildet.

Es ist der besondere Ansatz der vorliegenden Erfindung, eine Antennenstruktur für ein RFID-Transponderetikett aus einer elektrisch leitfähigen Schicht heraus mittels eines Laserstrahls zu formen. Hierdurch kann aus der elektrisch leitfähigen Schicht, die zunächst für elektromagnetische Wellen einen abschirmenden Charakter besitzt, eine Antenne geformt werden, wodurch der Datenaustausch zwischen RFID-Chip auf der einen Seite und dem Reader auf der anderen Seite ermöglicht wird.

Basierend auf diesem Prinzip ist somit möglich, aus einer laserbeschriftbaren Folie eine Antennenstruktur zu formen und somit die Grundlage für ein RFID-Etikett zu schaffen. Gerade laserbeschriftbare Folien galten bisher aufgrund der durchgängigen elektrisch leitfähigen Beschichtung und dem damit einhergehenden abschirmenden Charakter in Kombination mit RFID-Etiketten als ungeeignet. Das hier vorgeschlagene Verfahren dagegen ermöglicht überraschenderweise gerade mittels solcher Folien ein effizientes und kostengünstiges Produktionsverfahren für RFID-Etiketten.

Darüber hinaus können durch die Verwendung von laserbeschriftbaren Folien neben der Ausbildung von Antennenstrukturen auch gleichzeitig weitere optische Kennzeichnungselemente in das Etikett eingebracht werden, wodurch die Effizienz bei der Herstellung von RFID-Etiketten noch zusätzlich gesteigert werden kann.

In einer besonderen Ausführungsform erfolgt die partielle Modifikation der elektrisch leitfähigen Beschichtung mittels Energieeintrag, vorzugsweise mittels eines Laserstrahls. Ein solcher Laserstrahl ist in der Lage, die elektrisch leitfähige Beschichtung des verwendeten Folienaufbaus besonders effizient und sehr genau auszubilden. Bei Bedarf kann der Laserstrahl sehr einfach programmiert werden und so die gewünschte Antennenstruktur ohne größeren Aufwand variiert werden.

Vorzugsweise umfasst der Schritt zum Aufbringen des Transponderchips ferner einen Schritt zur Ausbildung einer elektrisch leitfähigen Verbindung zwischen Transponderchip und Antennenstruktur. Somit kann der RFID-Chip unmittelbar mit der ausgebildeten Antennenstruktur kontaktiert werden und damit die Antennenstruktur zur drahtlosen Datenübertragung nutzen.

Alternativ kann in dem Schritt zum Aufbringen des Transponderchips der Transponderchip mit einer Primärantenne elektrisch isoliert auf die ausgebildete Antennenstruktur aufgebracht werden. Somit ist keine galvanische Verbindung zwischen Transponderchip und der ausgebildeten Antennenstruktur erforderlich. Vielmehr koppelt das Transponderelement aus Chip und Primärantenne üblicherweise kapazitiv in die erfindungsgemäß ausgebildete Antennenstruktur ein. Die Antennenstruktur dient in diesem Fall als Booster- oder Sekundärantenne und verstärkt die Signale des Transponderelements.

In einer besonderen Ausführungsform umfasst das Verfahren ferner einen Schritt zur Feinabstimmung der ausgebildeten Antennenstruktur. Vorzugsweise wird bei dieser Feinabstimmung durch Energieeintrag, beispielsweise mittels eines Laserstrahls, die elektrisch leitfähige Beschichtung im Bereich der Antennenstruktur angepasst. Somit ist es möglich auch noch nach der Ausbildung der Antennenstruktur und dem Anbringen des Transponderelements in einem gewissen Bereich die Sende- und Empfangseigenschaften zu variieren und dabei insbesondere zu optimieren. Geringfügige Fertigungstoleranzen lassen sich somit ausgleichen und es ist möglich, die RFID-Etiketten in einem konstant hohen Qualitätsstandard zu produzieren.

Vorzugsweise umfasst das erfindungsgemäße Verfahren ferner einen Schritt zum Aufbringen eines Oberlaminats auf die Trägerbahn mit Antennenstruktur und Transponderchip. Mittels eines solchen Oberlaminats kann der darunter liegende Aufbau aus Transponderelement und Antennenstruktur vor Beschädigungen und Manipulationen geschützt werden.

In einer speziellen Ausführungsform umfasst das Verfahren ferner einen Schritt zum Einbringen einer Kennzeichnung in die elektrisch leitfähige Beschichtung. Somit können simultan zu der Ausbildung der Antennenstruktur auch gleichzeitig optische Kennzeichnungselemente in das Transponderetikett eingebracht werden. Dies erhöht zusätzlich die Effizienz des Produktionsvorgangs, da ein separater Kennzeichnungsschritt entfallen kann.

In einer besonderen Ausführungsform der vorliegenden Erfindung wird die Antennenstruktur durch partielles Abtragen der elektrisch leitfähigen Beschichtung ausgebildet. Somit verbleibt in den abgetragenen Bereichen keinerlei elektrisch leitfähige Beschichtung, die einer elektromagnetischen Datenübertragung im Wege stehen könnte. Alternativ kann die Antennenstruktur lokal durch partielle Modifikation der elektrisch leitfähigen Beschichtung ausgebildet werden.

Bei der oben genannten partiellen Modifikation kann es sich beispielsweise um eine physikalische oder chemische Umwandlung der elektrisch leitfähigen Beschichtung handeln. Die leitfähige Beschichtung kann dabei durch Erwärmung lokal verdrängt werden. Ebenso ist es möglich, dass durch die Laserbestrahlung eine chemische Umwandlung (zum Beispiel eine Oxidation) erfolgt, wodurch das Material der Beschichtung von einer elektrisch leitfähigen Verbindung in eine Verbindung mit elektrisch isolierenden Eigenschaften übergeht.

Im nachfolgenden wird die Erfindung anhand der beigefügten Figuren beschrieben. Dabei zeigen:
- Figur 1: eine schematische Darstellung einer Draufsicht auf ein erfindungsgemäßes Transponderetikett;
- Figur 2: eine schematische Darstellung eines Querschnitts durch ein erfindungsgemäßes Transponderetikett;
- Figur 3: eine schematische Darstellung eines Herstellungsverfahrens für ein erfindungsgemäßes Transponderetikett;
- Figur 4: eine schematische Darstellung einer Draufsicht auf ein Transponderetikett mit Dipolantenne;
- Figur 5: ein Transponderelement mit Primärantenne;
- Figur 6: eine schematische Darstellung einer Draufsicht auf ein Transponderetikett mit Schlitzantenne; und
- Figur 7: eine schematische Darstellung einer Draufsicht auf ein Transponderetikett mit einer anderen Antennenform.

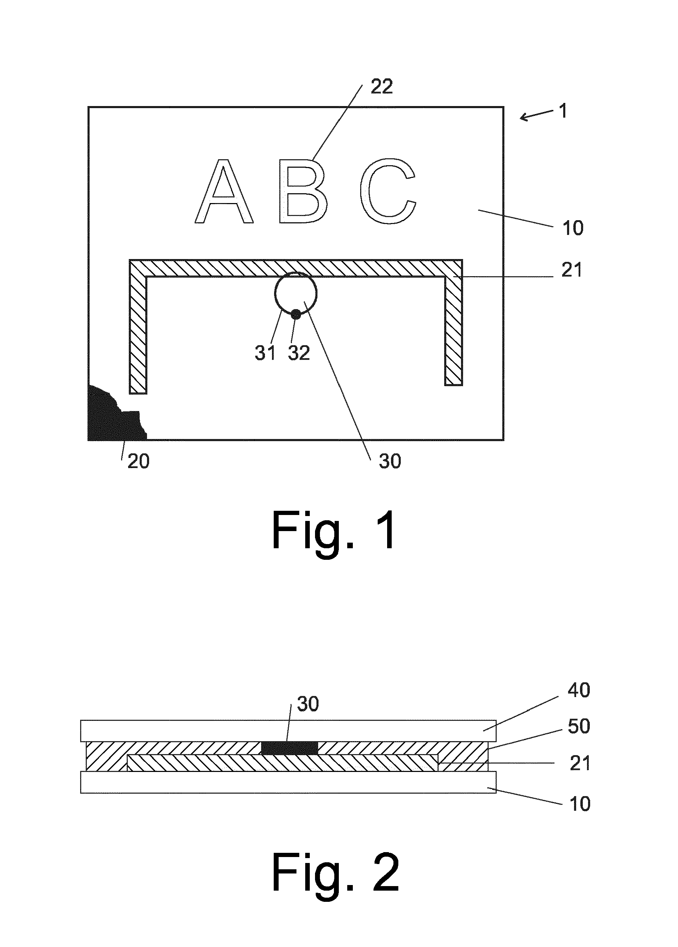

Figur 1 zeigt eine Draufsicht auf ein Transponderetikett 1, das gemäß dem erfindungsgemäßen Verfahren hergestellt wurde. Auf einer elektrisch isolierenden Trägerbahn 10 befindet sich eine Antennenstruktur 21. Diese Antennenstruktur 21 steht mit einem Transponderelement 30 in Verbindung.

Zu Anschauungszwecken ist in Figur 1 in der linken unteren Ecke des Transponderetiketts 1 ein verbliebener Rest einer elektrisch leitfähigen Beschichtung 20 dargestellt. Mit dieser elektrisch leitfähigen Beschichtung 20 war die Trägerfolie 10 ursprünglich ganz oder zumindest in großen Teilen bedeckt.

Figur 2 zeigt einen Querschnitt durch das oben beschriebene Transponderetikett 1 mit der Trägerfolie 10, der Antennenstruktur 21 und dem Transponderelement 30. Zum Schutz dieses Aufbaus vor Beschädigungen, kann über das Transponderelement 30 und die Antennenstruktur 21 ein Oberlaminat 40 aufgebracht werden, das mittels eines Klebstoffes 50 mit den Transponderetikett verklebt wird. Zusätzlich kann (nicht dargestellt) eine Klebstoffschicht auf der Unterseite der Trägerfolie 10 aufgebracht werden, so dass das Etikett als Selbstklebetikett auf einen Körper oder eine Unterlage aufgeklebt werden kann.

Vorzugsweise besteht das Transponderelement 30 aus einem Transponderchip 32 und einer Primärantenne 31, die beide auf einem dünnen Folienelement aufgebracht sind. Unter dem Begriff "Primärantenne" ist in diesem Zusammenhang die Antenne zu verstehen, welche unmittelbar mit dem Transponderchip verbunden ist und sich während des hier beschriebenen Herstellungsverfahrens bereits gemeinsam mit dem Transponderchip auf dem Transponderelement 30 befindet.

Ein solches Transponderelement 30 kann besonders einfach an einer geeigneten Position der Antennenstruktur 21 angebracht werden. Beispielsweise kann ein solches Transponderelement aufgeklebt werden. Die Primärantenne des Transponderelements 30 koppelt dabei üblicherweise kapazitiv in die Antennenstruktur 21 ein. Die Antennenstruktur 21 wirkt somit als Booster- oder Sekundärantenne und überträgt die Signale an die Umgebung bzw. empfängt die Signale von der Umgebung und leitet diese an die Primärantenne weiter.

Alternativ ist es auch möglich als Transponderelement 30 einen RFID-Chip zu verwenden, der galvanisch mit der Antennenstruktur 21 verbunden wird. Beispielsweise kann hierzu eine elektrisch leitfähige Klebeverbindung zwischen Chip und Antennenstruktur 21 verwendet werden. Aber auch andere Verfahren zur elektrischen Kontaktierung zwischen Chip und Antenne 21 sind möglich.

Bei dem erfindungsgemäßen Herstellungsverfahren wird zur Erzeugung der Antennenstruktur 21 zunächst eine Trägerbahn 10 mit einer großflächigen, elektrisch leitfähigen Beschichtung 20 verwendet. Vorzugsweise ist die Trägerbahn 10 vollflächig mit einer elektrisch leitfähigen Beschichtung versehen.

Die elektrisch leitfähige Beschichtung 20 kann dabei in jedem hierfür geeigneten Verfahren auf die Trägerfolie 10 aufgebracht werden. Beispielsweise kann eine dünne Metallschicht auf die Trägerbahn 10 aufgedampft werden. Alternativ ist es auch denkbar, eine dünne Metallfolie auf die Trägerbahn 10 aufzubringen oder einen elektrisch leitfähigen Lack auf die Trägerbahn 10 aufzudrucken oder in einem anderen Verfahren aufzutragen.

Grundsätzlich lassen sich bereits mit elektrisch leitfähigen Schichten von 100 Nanometern und mehr brauchbare Resultate erzielen. In der Praxis haben sich jedoch elektrisch leitfähige Schichten mit einer höheren Dicke von beispielsweise einigen Mikrometer, vorzugsweise 2 - 5 µm als besonders vorteilhaft erwiesen.

Tendenziell verbessern sich die Antenneneigenschaften mit zunehmender Dicke der elektrisch leitfähigen Schicht. So eignet sich beispielsweise eine gedruckte Silberleitpaste mit einer Dicke von einigen Mikrometern sehr gut als eine leitfähige Schicht.

Ein besonders einfach zu realisierender Aufbau mit einer elektrisch leitfähigen Schicht, wie sie für den erfindungsgemäßen Aufbau benötigt wird, ergibt sich bei der Verwendung eines laserbeschriftbaren Folienaufbaus, bei dem die laseraktive Schicht aus einem elektrisch leitfähigen Material gebildet ist oder besteht. Ein solcher Folienaufbau kann idealerweise unmittelbar für das oben beschriebene Verfahren zur Herstellung eines Transponderetiketts verwendet werden. Somit ergibt sich eine einfache, effiziente und damit auch kostengünstige Möglichkeit für eine individuelle Gestaltung der Antennenstruktur 21.

Bei laserbeschriftbaren Folien unterscheidet man zwischen zwei prinzipiell unterschiedlichen Aufbauten. Zum einen existieren so genannte Abbrandfolien, bei denen auf einer Trägerfolie eine dünne Substanz aufgetragen ist. Trägerfolie und aufgetragene Substanzen besitzen dabei unterschiedliche Farben, mit einem starken farblichen Kontrast. Durch Einwirken eines Laserstrahls auf die aufgetragene Substanz verdampft diese Substanz und die darunter befindliche Folienbahn wird sichtbar. Die Substanz wird ablatiert. Auf diese Weise können nicht nur optische Kennzeichnungen hergestellt werden, sondern es kann auch durch gezieltes Verdampfen der aufgetragenen, elektrisch leitfähigen Substanz eine leitfähige Struktur, wie beispielsweise eine Antenne gebildet werden. Nachteilig ist hierbei, dass bei dem Verdampfen des elektrisch leitfähigen Materials diese Dämpfe als Emissionen in die Umgebung abgegeben werden.

Bei einer alternativen Ausführungsform der laserbeschriftbaren Folien werden diese Emissionen vermieden. Hierzu ist auf der Trägerfolie wiederum eine Beschichtung mit einem farblichen Kontrast zur Trägerfolie aufgebracht. Darüber ist nun zusätzlich noch eine bahnförmige Schutzschicht aufgebracht, welche für einen Laserstrahl durchlässig ist. Der Laserstrahl kann daher während des Kennzeichnungsvorgangs diese Schutzschicht durchdringen und die darunter befindliche farbige Beschichtung beeinflussen. Im Gegensatz zu dem oben beschriebenen Verdampfen erfolgt dabei lediglich ein Verdrängen oder eine chemische Umwandlung (beispielsweise eine Oxidation oder Ähnliches) der Beschichtung. Gleichzeitig ändern sich bei diesem Vorgang auch die elektrischen Eigenschaften der Beschichtung, sodass die ursprünglich elektrisch leitfähige Beschichtung in einen elektrisch nicht leitenden Zustand übergeht. Somit können auch in diesem Fall gezielt elektrische Strukturen in diesem Folienaufbau erzeugt werden.

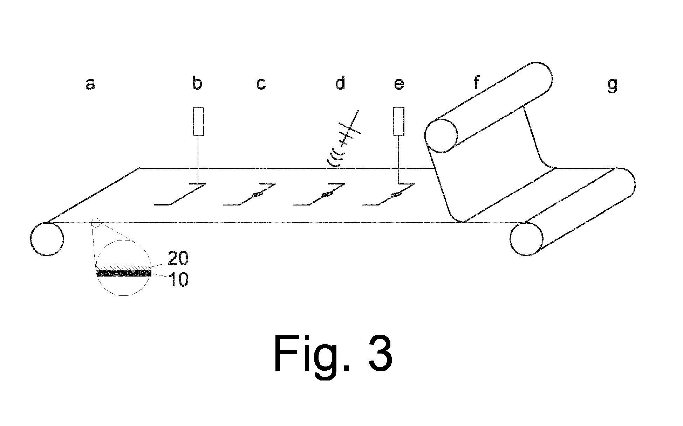

Figur 3 zeigt eine schematische Darstellung eines Herstellungsprozesses für ein erfindungsgemäßes Transponderetikett. Zunächst wird in einem ersten Schritt a eine Trägerbahn 10 mit einer elektrisch leitfähigen Beschichtung 20 bereitgestellt.

Zur Ausbildung der Antennenstruktur 21 wird nun diese elektrisch leitfähige Beschichtung 20 in einem weiteren Schritt b soweit modifiziert, dass sich die gewünschte Antennenstruktur 21 ausbildet. Die Modifikation der elektrisch leitfähigen Beschichtung erfolgt dabei mittels eines Laserstrahls. Der Laserstrahl trifft auf die Beschichtung und die dabei einwirkende Energie verändert die Beschichtung lokal so, dass die Antennenstruktur 21 von ihrer Umgebung elektrisch isoliert wird.

Für die vorliegende Erfindung ist es dabei erforderlich, dass bei den laserbeschriftbaren Folien die laseraktive Schicht zunächst eine relativ gute elektrische Leitfähigkeit besitzt, die nach dem Energieeintrag durch den Laserstrahl signifikant herabgesetzt wird. Dabei ist es unerheblich, ob aufgrund der Laserenergie das Material aufgeschmolzen wird und somit eine elektrisch nicht leitende Spur entsteht oder ob durch die Energie des Laserstrahls eine chemische Umwandlung erfolgt, die zu einer elektrisch nicht oder nur sehr schlecht leitenden chemischen Verbindung führt. Wichtig ist dabei lediglich, dass basierend auf der Lasergravur die Antennenstruktur 21 in ihrer elektrischen Leitfähigkeit deutlich von der Umgebung abgegrenzt wird.

Wird dabei als Trägerbahn 10 ein Material verwendet, das im Vergleich zu der elektrisch leitfähigen Beschichtung einen hohen optischen Kontrast aufweist, so kann auch gleichzeitig eine optische Kennzeichnung 22 erfolgen. Beispielsweise kann als Trägerbahn 10 eine helle, vorzugsweise weiße Kunststoffbahn verwendet werden, auf die eine dunkle Beschichtung 20 aufgebracht ist. Denkbar wäre zum Beispiel, eine Beschichtung 20 aus einem graphithaltigen Material. Alternativ kann jedoch ebenso eine helle, beispielsweise silbrige Beschichtung 20 aus einem Metall verwendet werden, die auf einer dunklen Trägerbahn 10 aufgebracht ist.

Verdampft der Laserstrahl daraufhin die Beschichtung 20 oder führt der Laserstrahl die Beschichtung 20 in einen durchscheinenden Zustand über, so wird die darunter befindliche, kontraststarke Folie sichtbar, was zu einer gut wahrnehmbaren Kennzeichnung führt. Eine solche Kennzeichnung kann beispielsweise innerhalb des Bereichs der Antennenstruktur 21 eingraviert werden.

Alternativ können auch außerhalb der Antennenstruktur 21 weitere Strukturen 22 bestehen bleiben, die als optische Kennzeichnungen des Transponderetiketts dienen.

Besonders vorteilhaft als optische Kennzeichnung ist beispielsweise eine Kennzeichnung mittels Schriftzeichen, wie beispielsweise Buchstaben und Ziffern. Ferner kann auf diese Weise auch ein maschinenlesbarer Code, wie beispielsweise ein ein- oder zweidimensionaler Barcode bzw. Datamatrixcode erzeugt werden. Aber auch Symbole, Piktogramme, Firmenlogos usw. sind auf diese Weise möglich.

Nachdem aus der elektrisch leitfähigen Beschichtung 20 die Antennenstruktur 21 in der gewünschten Form erstellt wurde, wird in einem weiteren Schritt c ein Transponderelement 30 an dieser Antennenstruktur 21 angebracht.

Hierbei kann es sich vorzugsweise um ein Transponderelement handeln, auf welchem bereits vorgefertigt ein Transponderchip mit einer Primärantenne kontaktiert wurde. Zur besseren Weiterverarbeitung kann diese Kombination aus Chip und Antenne auf einem Folienelement aufgebracht sein. Dieses Folienelement mit Chip und Antenne kann dann sehr einfach an der gewünschten Position der Antennenstruktur 21 aufgeklebt werden. Zwischen der Primärantenne des Transponderelements und der Antennenstruktur 21 erfolgt in diesem Fall üblicherweise eine kapazitive Kopplung.

Alternativ ist es jedoch auch möglich, als Transponderelement 30 einen geeigneten Transponderchip zu verwenden, der elektrisch leitfähig mit der Antennenstruktur 21 verbunden wird. Für die Kontaktierung zwischen Transponderchip und Antennenstruktur eignen sich hierzu nahezu alle bekannten Verfahren, beispielsweise Löten, etc. Besonders bevorzugt kann die Kontaktierung jedoch mittels eines elektrisch leitfähigen Klebstoffes realisiert werden. In diesem Fall wird einerseits der Transponderchip leitfähig mit der Antennenstruktur 21 verbunden und der Chip gleichzeitig durch den Klebstoff auch mechanisch fixiert. Hierzu kann beispielsweise ein Haftklebstoff verwendet werden, der bereits bei Umgebungstemperaturen eine sichere Verbindung gewährleistet. Alternativ können auch aktivierbare Klebstoffe zum Einsatz kommen. Beispielsweis kann ein Klebstoff verwendet werden, der mittels Wärme- oder UV-Bestrahlung aktiviert wird und anschließend aushärtet.

Nachdem nun die Antennenstruktur 21 und das Transponderelement 30 zusammengefügt wurden, kann in einem optionalen Schritt d die Funktionen und insbesondere auch die Leistungsfähigkeit des Aufbaus überprüft werden. Funktionsunfähige Elemente können bereits hier aussortiert oder als defekt markiert werden, so dass diese nicht in einen operationellen Betrieb gelangen.

Sollte sich jedoch bei dieser ersten Funktionsprüfung herausstellen, dass der erfindungsgemäße Transponderaufbau zwar funktionsfähig ist, jedoch nur eine eingeschränkte Leistungsfähigkeit, d.h. verringerte Sende- und Empfangsreichweite besitzt, so kann in einem speziellen weiteren Verfahrensschritt e gegebenenfalls mittels Laserstrahl eine weitere Modifikation an der ausgebildeten Antennenstruktur durchgeführt werden und die Antennenstruktur so in geeigneter Weise angepasst werden, dass eine Verbesserung der Leistungsfähigkeit erreicht werden kann. Je nachdem, an welcher Stelle der Antennenstruktur die Modifikation erfolgt, wird die Induktivität und/oder die Kapazität der Antenne variiert und somit der operative Frequenzbereich verschoben.

Hierzu kann durch eine gezielte selektive Modifikation kleinerer Bereiche die Antennenstruktur 21 exakt so modifiziert werden, dass sie optimal auf den Gesamtaufbau abgestimmt ist und so die bestmögliche Sende- und Empfangsreichweite erzielt werden kann.

Auf diese Weise ist es sogar möglich, Toleranzen, die beispielsweise bei der Fertigung des Transponderelements 30 auftreten, durch gezieltes Feintuning der Antennenstruktur 21 auszugleichen und die Leistungsfähigkeit des Endprodukts auf einem konstant hohen Niveau zu halten.

Abschließend kann zum Schutz des so hergestellten Transponderaufbaus in einem weiteren Schritt f der Aufbau mit einem weiteren bahnförmigen Laminat 40 überdeckt werden. Vorzugsweise handelt sich hierbei um eine bahnförmigen Folie, welche mit dem zuvor hergestellten Aufbau aus Trägerbahn 10, Antennenstruktur 21 und Transponderetikett 30 verklebt wird, so dass die Antennenstruktur 21 und das Transponderelement 30 durch das Schutzlaminat 40 überdeckt und somit vor Beschädigungen geschützt sind.

Sind bereits bei der Fertigung der Antennenstruktur 21 noch weitere Kennzeichnungselemente 22 aus der elektrisch leitfähigen Beschichtung 20 erzeugt worden, so eignet sich als Schutzlaminat 40 vorzugsweise eine zumindest teilweise transparente Folienbahn. Somit bleiben die Kennzeichnungselemente auch weiterhin sichtbar und sind durch das Schutzlaminat 40 vor Beschädigung oder Manipulation geschützt.

Alternativ kann als Schutzlaminat 40 auch eine opake Folienbahn oder ein geeignetes Papier verwendet werden. In diesem Fall sind Antennenstruktur 21 und Transponderelement 30 nicht mehr sichtbar. Die opake Folienbahn kann jedoch zuvor, oder auch in einem noch folgenden Arbeitsschritt, mit einem geeigneten Aufdruck versehen werden. Somit ist es auch hier möglich, das Transponderetikett mit einer geeigneten optischen Kennzeichnung wie Schriftzeichen, Codes, z. B. Barcodes oder Datamatrix Codes, oder Logos zu versehen und entsprechend zu gestalten. Abschließend kann die Trägerbahn 10 mit dem erfindungsgemäß hergestellten Aufbau in einem weiteren Schritt g wieder auf eine Rolle aufgewickelt werden. Die Transponderetiketten 1 stehen somit für die Weiterverarbeitung in einer besonders komfortablen Form zur Verfügung.

Alternativ können die einzelnen Transponderetiketten auch unmittelbar nach der Fertigung voneinander getrennt werden. Hierzu eignet sich beispielsweise besonders gut ein geeignetes Stanzverfahren. In diesem Fall liegen die einzelnen Transponderetiketten bereits separat vor. Sollten bei dem oben beschriebenen, optionalen Prüfschritt d bereits defekte Elemente identifiziert worden sein, können diese nun direkt aussortiert und vernichtet werden.

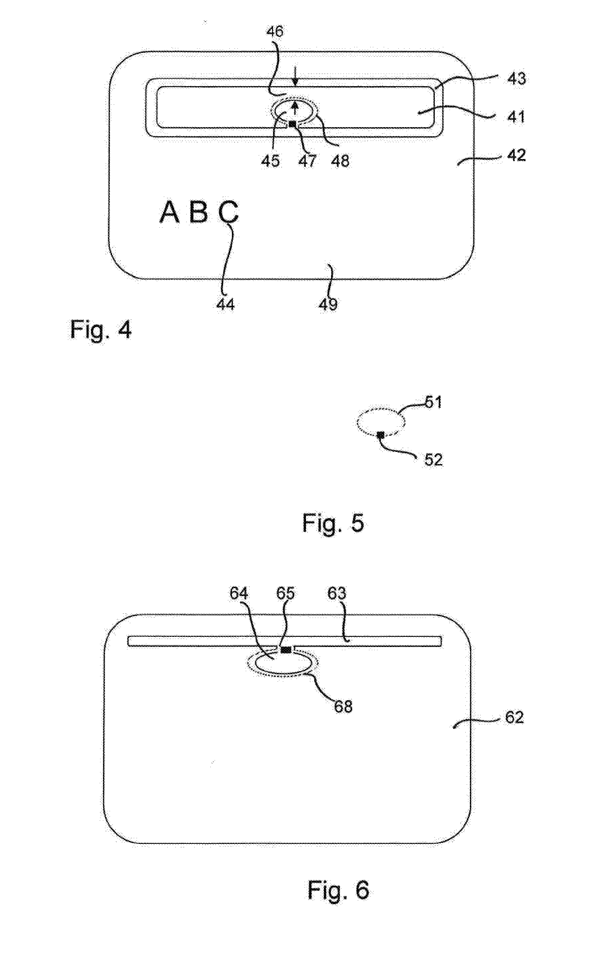

In den Figuren 4, 6 und 7 sind weitere Ausführungen von Transponderetiketten dargestellt. In Figur 5 ist ein Transponderelement dargestellt, wie es in den Transponderetiketten der Figuren 4, 6, 7 oder der Figur 1 verwendet werden kann.

Das Transponderetikett 42 der Figur 4 hat eine rechteckförmige Form, wobei die jeweiligen Ecken aus Gründen einfacher und sicherer Herstellung des Etiketts abgerundet sind. Das Transponderetikett umfasst auf einer Oberfläche eine elektrisch leitfähige, im vorliegenden Fall metallische Beschichtung, beispielsweise umfassend oder gebildet aus Aluminium. Am Anfang der Herstellung des Transponderetiketts ist der Transponderetikett-Rohling mit einer durchgehenden leitfähigen Metallschicht 49 versehen. Anschließend wird eine Dipol-Antenne 41 durch Laserbearbeitung der metallischen Oberfläche des Transponderetikett-Rohlings erzeugt. Hierzu wird ein Laserstrahl über den Bereich 43 geführt, um dort die elektrisch leitfähige Schicht umzuwandeln in eine deutlich weniger leitfähige oder nicht leitende Schicht. Beispielsweise kann das Aluminium im Bereich 43 durch Wärmeeintrag durch den Laserstrahl verdampft, also entfernt oder ablatiert werden. Alternativ kann auch eine Verschiebung der Aluminiumpartikel innerhalb des Bereichs 43 durch Wärmeeintrag durch den Laser erfolgen, indem durch Wärmeeffekte die Aluminiumpartikel vom Auftreffsbereich des Laserstrahls weg driften und sich somit ein deutlich weniger elektrisch leitfähiger oder nicht elektrisch leitfähiger Bereich 43 ergibt. Wiederum alternativ oder zusätzlich kann das Aluminium chemisch umgewandelt, beispielsweise oxidiert werden, um deutlich weniger leitfähig oder nicht leitend zu werden. Im Ergebnis ergibt sich ein ringförmiger Bereich 43, in dessen Inneren der Dipol 41 ausgebildet ist, sodass der Dipol 41 durch den Bereich 43 vom übrigen Teil 49 der leitenden metallischen Oberfläche des Etiketts 42 ausreichend elektrisch isoliert ist.

Es entsteht somit ein sich längs erstreckender Dipol 41, dessen Längsrichtung in der zeichnerischen Darstellung von rechts nach links gesehen deutlich länger ist als seine quer oder senkrecht dazu verlaufende Quererstreckung. In einem mittleren Bereich gesehen in Längserstreckungsrichtung, also beispielsweise gleich weit von den in Längserstreckungsrichtung gesehenen äußeren rechten und linken Enden, ist der Querschnitt des Dipols verjüngt. Der Dipol weist dann nur noch eine Breite 46 quer zur Längserstreckungsrichtung auf. Zur Verjüngung ist im dargestellten Ausführungsbeispiel eine ovale oder auch elliptische Aussparung 45 in der elektrisch leitfähigen, metallischen Beschichtung 49 ausgebildet, die ebenfalls wie der Bereich 43 deutlich weniger leitend oder nicht leitend ausgebildet ist. Die Aussparung 45 wird ebenfalls durch den Laserstrahl erzeugt. Die Aussparung 45 ist über einen Kanal 47 mit dem Bereich 43 verbunden. Es entsteht also eine Aussparung in Form eines Pilzes 47, 45 innerhalb des in Längsrichtung gesehen mittleren Bereichs des Dipols, sodass sich eine Verjüngung auf die Breite 46 in diesem Bereich des Dipols ergibt.

Andere Aussparungen sind ebenfalls denkbar, beispielsweise kann anstelle der ovalen oder elliptischen Form eine Kreisform verwendet werden oder eine Rechteckform oder die gesamte Aussparung wird als Rechteck ausgebildet, das den Bereich 43 im in Längsrichtung des Dipols gesehenen mittleren Bereich entsprechend verjüngt.

Der Dipol kann darüber hinaus an seinen äußeren zeichnerisch rechts und links dargestellten Enden gesehen in Längserstreckungsrichtung ebenfalls verjüngt sein.

Gegenüber der in Figur 1 dargestellten Ausführung des Transponderetiketts muss bei der in Figur 4 dargestellten Ausführung deutlich weniger Material entfernt bzw. weniger leitend oder nicht leitend umgewandelt werden, sodass das Herstellungsverfahren ökonomischer und umweltfreundlicher durchführbar ist. Die Verwendung eines Laserstrahls zur Erzeugung des Bereichs 43 sowie der Aussparung 45 und des Kanals 47 hat sich als vorteilhaft herausgestellt.

Das in Figur 5 dargestellte Transponderelement ist in Figur 4 gestrichelt gezeichnet und im Bereich der Aussparung 45 angeordnet. Das Transponderelement selbst weist einen Transponder-Chip 52 auf, dessen Anschlüsse galvanisch mit einer ringförmigen Leiterschleife, die eine Primärantenne des Transponderelements bildet, verbunden ist. Im dargestellten Fall weist das Transponderelement eine ovale oder elliptische Leiterschleife auf. Ein solches Transponderelement kann kommerziell erworben werden. Andere Antennenformen sind ebenfalls verwendbar, beispielsweise kreisrunde Antennenformen oder rechteckförmige Antennenformen mit abgerundeten Enden.

Die Kontur der schleifenförmigen Primärantenne ist zumindest teilweise oder überwiegend teilweise oder vollständig auf dem Dipol, jedoch davon elektrisch isoliert, angeordnet. Beispielsweise ist in Figur 4 ersichtlich, dass die ovale Kontur der Primärantenne leicht größer ist als die ovale Aussparung 45 im Dipol, sodass die Primärantenne 51 die Aussparung 45 umgibt, wenn die Antenne 51 in gedachter Projektion auf der metallischen Schicht 41 des Dipols zu liegen kommt. So entsteht im Betrieb eine kapazitive Kopplung zwischen der Primärantenne 51 und dem Dipol 41. Der Halbleiterchip beispielsweise liegt in der gedachten Projektion im bzw. oberhalb des Kanals 47. Das Transponderelement 51, 52 ist beispielsweise durch einen nicht leitenden Klebstoff auf dem Dipol bzw. mit dem Transponderetikett verbunden.

Durch Verwendung eines Transponderelements mit Primärschleifenantenne und Halbleiterchip, das nachträglich überlappend auf die Antennenstruktur aufgebracht wird, sind gewisse Vorteile bei der Positionierungsgenauigkeit beim Aufbringen der Primärantenne gegeben. Berücksichtigt man, dass während der Herstellung der Antenne mittels des Lasers, einschließlich der Herstellung von Verjüngungen oder Aussparungen, eine gegebene Positionsungenauigkeit vorliegt, ist es hinreichend, wenn die Primärschleifenantenne des Transponderelements ebenfalls mit einer ausreichenden, jedenfalls nicht unverhältnismäßig hohen Positionsgenauigkeit aufgebracht wird. Dies genügt, um zwischen Primär-Transponderelement und laserhergestellter Antenne eine ausreichende kapazitive Kopplung zu erzeugen. Verglichen mit einer galvanischen Kopplung eines Halbleiterchips mit der laserhergestellten Antenne, bei der beispielsweise die Antenne mit Anschlüssen des Halbleiterchips verbunden werden muss, ist bei einem Transponderelement mit Primärantenne eine geringere Positionsgenauigkeit wegen einer kapazitiven und nicht galvanischen Kopplung ausreichend.

Der Dipol befindet sich zeichnerisch dargestellt im oberen Teil des Transponderetiketts 42. Der untere Teil des Transponderetiketts 42 ist nicht durch den Dipol belegt, sodass die relativ großzügige Fläche an metallischer Beschichtung für eine individuelle Kennzeichnung zur Verfügung steht. Die Kennzeichnung wird ebenfalls mittels des Laserstrahls, der auch den Bereich 43 erzeugt, um die Dipol-Antenne freizulegen, hergestellt. Es können daher in der Serienfertigung eine Vielzahl von gleichen Transponderelementen hergestellt werden, die jeweils die gleiche Kennzeichnung aufweisen, oder auch individuelle Transponderetiketten, die jeweils eine für jedes einzelne Etikett individuelle mittels Laserstrahl eingebrachte Kennzeichnung aufweisen.

Beispielsweise eignen sich als eine mit einem Laserstrahl einzubringende Kennzeichnung Buchstaben oder eine Folge von Buchstaben eines Alphabets, eine oder mehrere Zahlen oder eine alphanumerischer Kennzeichnung oder ein Firmenlogo oder eine Kombination aus Vorgenanntem. Weiterhin eignen sich als Kennzeichnung ein ein- oder zweidimensionaler Barcode oder ein Datamatrixcode. Die mit dem Laserstrahl in die elektrisch leitfähige, metallische Oberflächenbeschichtung des Transponderetiketts einzubringende Kennzeichnung kann beispielsweise Information enthalten, die auch im Halbleiterchip 52 des Transponderelements 51, 52 elektronisch gespeichert sind. Somit kann eine elektronisch im Transponderetikett gespeicherte Information auch optisch sichtbar und durch eine Anwendungsperson optisch lesbar angebracht werden.

In manchen Ausführungen ist es wünschenswert, das Transponderetikett auf eine Oberfläche aufzukleben. Hierzu wird die Unterseite (nicht dargestellt) des Transponderetiketts 42 vollflächig oder teilflächig mit einem Klebstoff beschichtet. Somit ist es möglich, ein individuelles Transponderetikett zu erzeugen, das dann selbstklebend auf eine entsprechend zu kennzeichnende Oberfläche eines Körpers aufgebracht wird.

In Figur 6 ist ein Transponderetikett 62 dargestellt, das vom gleichen Transponderetikett-Rohling wie das in Figur 4 dargestellte Transponderetikett ausgeht, jedoch eine andere Antennenform aufweist. Die in Figur 6 durch Laserbearbeitung hergestellte Antenne ist eine so genannte Schlitzantenne 63, bei der lediglich ein geradliniger, sich längs erstreckender Schlitz 63 hergestellt ist. Der Schlitz 63 verläuft parallel zur längeren Seite des Transponderetiketts und ist in der Nähe dieser Längsseite angeordnet. Der Schlitz weist ein hohes Aspektverhältnis auf, sodass seine quer zur Längsrichtung gesehene Breite deutlich geringer ist als seine Länge. Durch die Schlitzantenne 63 wird im Betrieb eine HF-Wirkung erzeugt, sodass das Transponderetikett als RFID-Transponder verwendbar ist. Der Schlitz 63 ist mittels Laserstrahlbearbeitung aus dem Transponderetikett-Rohling hergestellt, der ganzflächig mit einer elektrisch leitfähigen, vorzugsweise metallischen Beschichtung, beispielsweise aus Aluminium, versehen ist. Zur Herstellung des langgestreckten Schlitzes 63 wird der entsprechende Bereich mit dem Laserstrahl beaufschlagt, sodass entweder das leitfähige Material der elektrisch leitfähigen Beschichtung entfernt oder ablatiert wird oder verdrängt oder oxidiert wird, sodass sich ein Bereich innerhalb des Schlitzes ergibt, der deutlich weniger leitfähig ist als die ursprüngliche elektrisch leitfähige Beschichtung oder nicht leitfähig ist.

Im mittleren Bereich, beispielsweise in etwa gleich weit von den rechts und links dargestellten Enden des Schlitzes 63 entfernt, ist der Schlitz verbreitert, sodass eine ovale oder elliptische Ausbuchtung 64 in der Nähe des Schlitzes 63 erzeugt wird, die über einen Kanal 65 mit dem Schlitz 63 verbunden ist. Aussparung 64 und Kanal 65 sind mittels des Laserstrahls hergestellt und deutlich weniger leitend als die metallische Beschichtung oder nicht leitend, ebenfalls wie die Schlitzantenne 63.

Gestrichelt ist ein Transponderelement 68 dargestellt, das die Kontur der ovalen oder elliptischen Aussparung 64 umgibt und in Projektion gesehen auf der metallischen Beschichtung liegt. Das Transponderelement 68 ist beispielsweise mit einem nicht leitenden Klebstoff auf der Oberfläche des Transponderetiketts 62 befestigt.

Während in Figur 6 gezeigt ist, dass der Schlitz geradlinig ausgebildet ist, kann der Schlitz auch gebogen ausgeführt sein, beispielsweise in einem kreisbogenförmigen Abschnitt geführt sein. Weiterhin könnte der Schlitz leicht gewellt ausgeführt sein, sofern der Schlitz im Mittel eine deutliche Erstreckung in eine Längsrichtung hat.

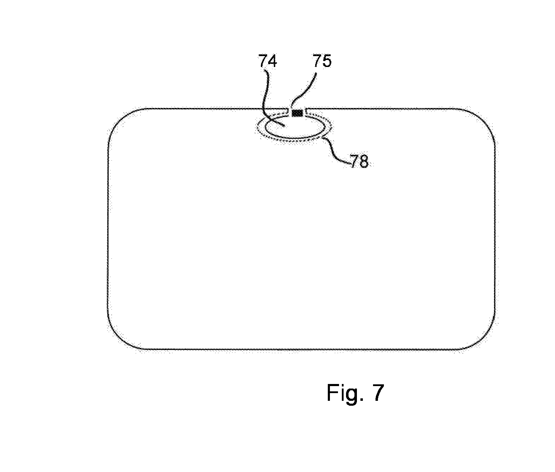

Figur 7 betrifft eine wiederum andere Antennenform, zu deren Herstellung der Transponderetikett-Rohling lediglich mit einer Aussparung 74 versehen wird, die in der Nähe einer Seite des Transponderetiketts angeordnet ist und mit dem Rand des Etiketts oder dem Rand der elektrisch leitfähigen Beschichtung verbunden ist. Beispielsweise ist in Figur 7 diese Aussparung eine ovale oder elliptische Aussparung 74, die über einen Kanal 75 mit dem Rand des Transponderetiketts bzw. dem Rand der elektrisch leitfähigen, beispielsweise metallischen Beschichtung verbunden ist. Anstelle der ovalen oder elliptischen Aussparung ist auch eine rechteckförmige Aussparung oder eine andere Form einer Aussparung möglich, solange diese Aussparung in der Nähe eines Rands des Transponderetiketts vorgesehen ist und mit dem Rand über einen Kanal verbunden ist. Aussparung 74 und Kanal 75 sind durch eine Laserbearbeitung der elektrisch leitfähigen Beschichtung erzeugt, sodass die elektrisch leitfähige, metallische Beschichtung des Etiketten-Rohlings an diesen Stellen entfernt ist oder deutlich weniger leitfähig ist oder nicht leitfähig ist gegenüber der elektrisch leitfähigen, metallischen Beschichtung. Wie wiederum gestrichelt dargestellt, ist ein Transponderelement 78 auf das Transponderetikett durch einen elektrisch nicht leitenden Klebstoff aufgeklebt und liegt in Projektion gesehen so auf dem Transponderetikett, dass es die Aussparung 74 zumindest teilweise umgibt und in Projektion gesehen auf der metallischen Beschichtung aufliegt. Die auf diese Weise erzeugte Antenne hat in ihrer elektrischen Wirkung Dipolcharakter.

Im Transponderetikett kann mittels des Laserstrahls eine Dipol-Antenne oder eine Schlitzantenne erzeugt werden, auf die ein Transponderelement mit einer Primärantenne aufgebracht ist. Durch Einwirkung eines Laserstrahls wird eine Antenne aus einem Etiketten-Rohling hergestellt, der ursprünglich mit einer elektrisch leitfähigen Beschichtung versehen ist, wobei durch die Laserbearbeitung die Antenne erzeugt wird. Ein Transponderelement, umfassend Halbleiterchip und Primärantenne, wird im Bereich einer Aussparung angebracht und koppelt kapazitiv mit der mittels Laserstrahl hergestellten Antenne. Als Antenne eignen sich verschiedene Antennenformen. Als Dipol-Antenne kann ein Stab-Dipol, wie in den Figuren 1 oder 4 dargestellt, verwendet werden, der im Fall der Figur 1 als abgeknickter Dipol ausgeführt ist. Die Dipol-Länge ist verglichen mit der Ausdehnung des gesamten Etiketts relativ lang, um die geeignete Resonanzfrequenz einzustellen. Die Breite der abgeknickten Dipolantenne ist gering, um das Labelformat klein zu halten. Der abgeknickte Dipol kann auch als Rahmen des eigentlichen Labels erscheinen.

Andere Dipole sind ebenfalls verwendbar, beispielsweise mit flächig ausgeprägten Strukturen, wie in Figur 4 dargestellt, die einen hohen kapazitiven Anteil aufweisen. Zusätzlich kann eine mäanderartige Struktur des Dipols durch den Laser erzeugt werden, sodass die Längsausdehnung des Dipols reduziert ist, aber trotzdem ein hoher induktiver Anteil der Antenne erzielt wird. Die Performance des RFID-Labels kann nachträglich noch optimiert werden, indem mittels Laserbearbeitung der Dipol nachträglich verändert und dadurch in seinen elektrischen Eigenschaften abgeglichen wird. Der Dipol kann beispielsweise an seinen äußeren Enden jeweilige flächige Verbreiterungen aufweisen, die durch mäanderförmige Strukturen mit seinem mittleren Bereich verbunden sind.

Als Weiteres ist eine Schlitzantenne mittels des Lasers sehr ökonomisch herstellbar, was nur wenig Materialabtrag oder Materialumwandlung auf dem Etiketten-Rohling erfordert. Die Schlitzlänge kann auch durch Ausbildung eines Rahmens um das Label auf die Etikettengröße optimiert werden. Durch Anpassung der Breite des Schlitzes kann ein Kompromiss aus Performance und optisch gewünschter Erscheinung des Kunden gefunden werden. In allen Fällen ist es möglich, ebenfalls mittels Laserbearbeitung eine optische Kennzeichnung in die elektrisch leitfähige Beschichtung des Labels individuell einzubringen.

Die vorliegende Erfindung betrifft also ein Transponderetikett und ein entsprechendes Herstellungsverfahren für ein Transponderetikett, bei dem die Antennenstruktur mittels eines Laserstrahls aus einer elektrisch leitfähigen Fläche eines Etiketts heraus erzeugt wird. Somit können individuelle und komplexe Antennenstrukturen besonders einfach und präzise hergestellt werden. Eine nachträgliche Feinabstimmung der so hergestellten Antennenstruktur ist möglich und führt zu besonders effizienten Transponderetiketten.

## Patentansprüche

1. Verfahren zur Herstellung eines Transponderetiketts, umfassend:
- Bereitstellen einer Trägerbahn (10) mit einer elektrisch leitfähigen Beschichtung (20);
- Ausbilden einer Antennenstruktur (21) auf der Trägerbahn durch partielle Modifikation der elektrisch leitfähigen Beschichtung mittels Engergieeintrag und/oder Laserstrahl;
- Aufbringen eines Transponderelements (30) auf die Trägerbahn mit der ausgebildeten Antennenstruktur.

2. Verfahren nach Anspruch 1, wobei der Schritt zum Aufbringen eines Transponderelements ferner einen Schritt zur Ausbildung einer elektrisch leitfähigen Verbindung zwischen einem im Transponderelements enthaltenen Transponderchip und der ausgebildeten Antennenstruktur umfasst.

3. Verfahren nach Anspruch 1 oder 2, wobei der Schritt zum Aufbringen des Transponderelements ein Aufbringen eines mit einer Primärantenne (31) gekoppelten Transponderchips (32) umfasst, wobei das Transponderelement elektrisch isoliert auf die ausgebildete Antennenstruktur aufgebracht wird.

4. Verfahren nach einem der Ansprüche 1 bis 3, das ferner ein anschließendes Feinabstimmen der bereits im Schritt des Ausbildens ausgebildeten Antennenstruktur mittels Energieeintrag und/oder Laserstrahl auf die elektrisch leitfähige Beschichtung umfasst.

5. Verfahren nach einem der Ansprüche 1 bis 4, das ferner ein Aufbringen eines Oberlaminats (40) auf die Trägerbahn mit Antennenstruktur und Transponderchip nach dem Ausbilden der Antennenstruktur und nach dem Aufbringen des Transponderelements umfasst.

6. Verfahren nach einem der Ansprüche 1 bis 8, das ferner ein Einbringen einer Kennzeichnung in die elektrisch leitfähige Beschichtung mittels Energieeintrag und/oder Laserstrahl umfasst, wobei die Kennzeichnung einen Buchstaben (44) eines Alphabets oder eine Zahl oder eine alphanumerische Kennzeichnung oder ein Firmenlogo oder einen eindimensionalen oder zweidimensionaler Barcode oder einen Datamatrixcode umfasst.

7. Verfahren nach einem der Ansprüche 1 bis 6, bei dem die Antennenstruktur als Dipolantenne (41) ausgebildet wird, wobei die Dipolantenne als ein sich längs erstreckender Streifen ausgebildet ist, in dessen mittlerem Bereich anschließend das Transponderelement (51, 52) zumindest teilweise überlappend mit der Dipolantenne angeordnet ist.

8. Verfahren nach Anspruch 7, bei dem die Dipolantenne im mittleren Bereich einen quer zur Längserstreckungsrichtung der Dipolantenne verjüngt hergestellt wird, so dass sie einen geringeren Querschnitt (46) aufweist als außerhalb des mittleren Bereichs.

9. Verfahren nach einem der Ansprüche 1 bis 6, bei dem die Antennenstruktur als Schlitzantenne (63) ausgebildet ist, indem in der leitfähigen Beschichtung ein langgestreckter Schlitz ausgebildet wird, indem dort die leitfähige Beschichtung entfernt wird oder elektrisch wenig oder nicht leitend umgewandelt wird.

10. Verfahren nach Anspruch 9, bei dem zur Ausbildung der Schlitzantenne der in der elektrisch leitfähigen Beschichtung ausgebildete Schlitz (63) im Vergleich zur in seiner Längserstreckungsrichtung gegebenen Länge eine wesentlich kleinere quer zur Längserstreckungsrichtung gegebene Breite aufweist und wobei in einem mittleren Bereich des Schlitzes der Schlitz verbreitert ausgebildet wird und das Transponderelement den verbreitert ausgebildeten Schlitz teilweise umgibt.

11. Verfahren nach einem der Ansprüche 1 bis 6, bei dem randseitig an einem Rand der elektrisch leitfähigen Beschichtung eine Aussparung (78) ausgebildet wird, indem dort die leitfähige Beschichtung entfernt wird oder elektrisch wenig oder nicht leitend umgewandelt wird, wobei das Transponderelement die randseitige Aussparung zumindest teilweise umgibt angeordnet wird.

12. Transponderetikett, hergestellt nach einem Verfahren nach einem der Ansprüche 1 bis 6, umfassend:
- eine elektrisch isolierende Trägerbahn (10);
- eine elektrisch leitfähige Beschichtung (20), die auf der elektrisch isolierenden Trägerbahn (10) aufgebracht ist, wobei in der elektrisch leitfähigen Beschichtung (20) durch eine partielle Modifikation eine Antennenstruktur (21) ausgebildet ist; und
- ein Transponderelement (30), das mindestens einen Transponderchip umfasst.

13. Transponderetikett nach Anspruch 12, wobei das Transponderelement (30) einen Transponderchip umfasst, der mit der Antennenstruktur elektrisch leitend verbunden ist, oder einen mit einer Primärantenne (31) gekoppelten Transponderchip (32), der auf die Antennenstruktur elektrisch isoliert aufgebracht ist.

14. Transponderetikett nach Anspruch 12 oder 13, das ferner ein Oberlaminat (40) umfasst, das auf die Trägerbahn (10) mit elektrisch leitfähiger Beschichtung (20) und dem Transponderelement (30) aufgebracht ist.

15. Transponderetikett nach einem der Ansprüche 12 bis 14, bei dem die Antennenstruktur eine Dipolantenne ist oder eine Schlitzantenne, die einen langgestreckten Schlitz aufweist, der in die leitfähige Beschichtung (20) eingebracht ist, indem die leitfähige Beschichtung im Bereich des Schlitzes entfernt oder elektrisch wenig oder nicht leitend umgewandelt ist.
